# FASCICULE DE BREVET EUROPEEN

(11) **EP 3 085 598 B1**
(45) Date de publication et mention de la délivrance du brevet: **15.01.2020**
(21) Numéro de dépôt: 16166440.4
(22) Date de dépôt: 21.04.2016
(51) Int. Cl.: B61D 23/02, B60P 1/43

(54) **DISPOSITIF COMBLE-LACUNE À ENCOMBREMENT RÉDUIT**
LÜCKENSCHLIESSERVORRICHTUNG MIT REDUZIERTEM PLATZBEDARF
A GAP FILLER DEVICE HAVING A REDUCED BULK

(30) Priorité: 21.04.2015 FR 1553540
(43) Date de publication de la demande: 26.10.2016
(73) Titulaire: ALSTOM Transport Technologies, 93400 Saint-Ouen (FR)
(72) Inventeur: KONDYRA, Emmanuel, 17000 La Rochelle (FR); DELEMOTTE, Jean-Michel, 17390 La Tremblade (FR)
(74) Mandataire: Lavoix

(56) Documents cités:
- EP-A1- 0 217 265
- WO-A1-2012/048759
- FR-A1- 2 873 635
- JP-A- 2009 292 361
- US-A1- 2015 013 565

## Description

La présente invention concerne un dispositif comble-lacune, destiné à équiper un véhicule ferroviaire.

On connait déjà, dans l'état de la technique, notamment d'après WO 2012/048759, un dispositif comble-lacune semblable à celui du préambule de la revendication 1.

On connait déjà, dans l'état de la technique, un dispositif comble-lacune comportant une rampe mobile dans une direction horizontale entre une position escamotée dans un logement aménagé sous un plancher du véhicule ferroviaire, et une position déployée hors dudit logement. Plus particulièrement, la rampe est destinée à être agencée sous une porte du véhicule ferroviaire.

Ainsi, lorsque la rampe est en position déployée, elle s'étend entre ladite porte du véhicule ferroviaire et un quai situé en regard de cette porte, et permet alors de faciliter l'accès au véhicule, notamment pour les personnes à mobilité réduite, et plus particulièrement pour les personnes en fauteuil roulant.

Un tel dispositif comble-lacune comporte de manière classique un mécanisme de guidage et d'entrainement de la rampe en translation dans la direction horizontale, implanté sous le plancher du véhicule.

Dans certains cas, la rampe comporte des rebords latéraux, s'étendant verticalement en saillie depuis une surface supérieure de la rampe, notamment afin de sécuriser le passage de fauteuils roulants, de poussettes ou autres sur cette rampe.

Ces rebords latéraux ont pour but d'éviter le glissement des roues de fauteuils roulants ou de poussettes, ou de tout autre moyen d'aide au déplacement des personnes à mobilité réduites (par exemple une canne). Toutefois, la présence de tels rebords augmente l'encombrement vertical de la rampe, qui nécessite donc un logement plus important.

L'invention a notamment pour but de remédier à cet inconvénient, en fournissant une rampe munie de rebords latéraux, dont l'encombrement est réduit.

A cet effet, l'invention a notamment pour objet un dispositif comble-lacune selon la revendication 1.

Les rebords latéraux selon l'invention sont mobiles entre la première position, qui correspond à son utilisation lorsque la rampe est déployée, et la seconde position qui correspond à une position de rangement dans le logement. Dans cette seconde position, l'encombrement vertical des rebords latéraux, et donc l'encombrement vertical de la rampe, est réduit, si bien que l'encombrement du logement est limité.

Un dispositif comble-lacune selon l'invention peut comporter en outre l'une ou plusieurs des caractéristiques suivantes, prises seules ou selon toutes combinaisons techniquement envisageables.
- Chaque rebord latéral est prolongé par une partie formant levier, solidaire du rebord, le dispositif comble-lacune comportant des moyens de pivotement du rebord autour de la liaison pivot.
- Les moyens de pivotement comportent : une tige mobile en translation dans une direction formant un angle non nul avec l'axe de pivotement, coopérant avec la partie formant levier, et des moyens de déplacement de la tige mobile, comprenant un vérin.
- Les moyens de déplacement sont communs à chaque tige mobile, et comportent une came excentrique, reliée d'une part à un piston du vérin et d'autre part à chaque tige mobile, pour convertir un mouvement du piston en un mouvement de chaque tige mobile.
- Chaque rebord est relié à la partie formant levier respective en formant un angle, de sorte que le rebord lié à la partie formant levier présentent ensemble une section transversale en forme de L, la liaison pivot étant ménagée à proximité de l'intersection entre le rebord et la partie formant levier.
- Chaque rebord et la partie formant levier correspondante sont sensiblement coplanaires, l'un dans le prolongement de l'autre, la liaison pivot étant ménagée entre ce rebord et cette partie formant levier.
- Le dispositif comble-lacune comporte une trappe mobile entre une position fermée d'obturation du logement lorsque la rampe est en position escamotée, et une position ouverte dans laquelle la trappe s'étend entre le plancher et la rampe en position déployée.
- La trappe en position ouverte repose sur la surface supérieure de la rampe, chaque rebord s'étendant, dans la direction horizontale, depuis la trappe jusqu'à une extrémité libre de la rampe.
- La hauteur d'un rebord est comprise entre 0 et 6 cm.
- La surface supérieure de la rampe est au moins en partie inclinée.

L'invention sera mieux comprise à la lecture de la description qui va suivre, donnée uniquement à titre d'exemple et faite en se référant aux figures annexées, parmi lesquelles :
- les figures 1 et 2 sont des vues en coupe longitudinale d'un dispositif comble-lacune selon un exemple de mode de réalisation de l'invention, dont la rampe est respectivement en position déployée et en position escamotée ;
- la figure 3 est une vue en perspective d'un rebord latéral de la rampe de la figure 1 en position déployée ;
- les figures 4 et 5 sont des vues schématiques en coupe transversale du rebord latéral de la figure 3, respectivement dans des première et seconde positions ;
- la figure 6 est une vue en perspective d'un dispositif comble-lacune selon une variante de réalisation ;
- la figure 7 est une vue partielle en coupe transversale du dispositif comble-lacune de la figure 6.

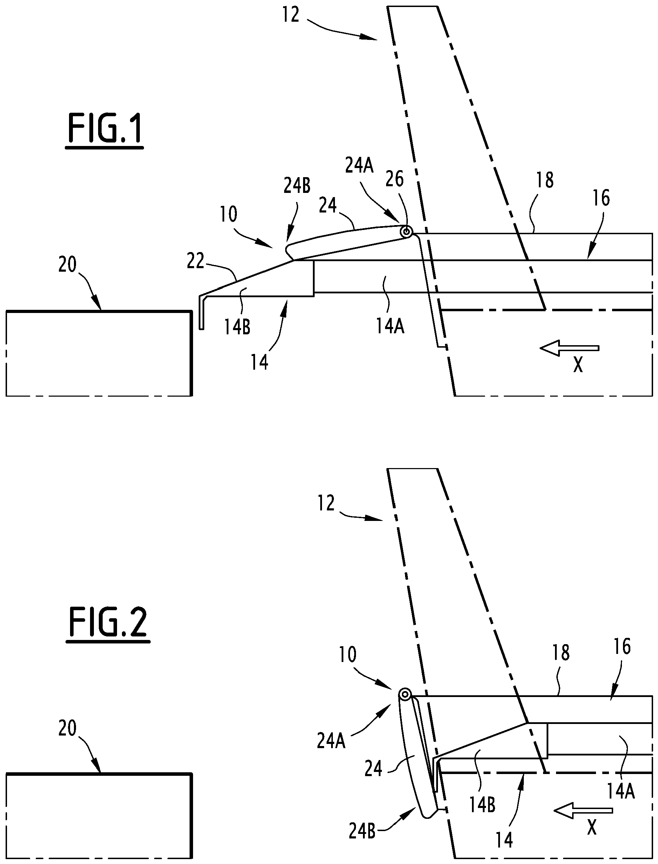

On a représenté, sur les figures 1 et 2, un dispositif comble-lacune 10 équipant un véhicule ferroviaire 12, et plus particulièrement destiné à être agencé sous une porte de ce véhicule ferroviaire, afin de faciliter l'accès à ce véhicule ferroviaire, notamment pour les personnes à mobilité réduite, et plus particulièrement pour les usagers en fauteuils roulants.

Le dispositif comble-lacune 10 comporte une rampe 14 mobile entre une position escamotée dans un logement 16 ménagé sous un plancher 18 du véhicule ferroviaire (comme cela est représenté sur la figure 2) et une position déployée hors du logement 16 (comme cela est représenté sur la figure 1).

Dans la position déployée, la rampe 14 est destinée à s'étendre depuis le véhicule ferroviaire 12 jusqu'à un quai 20 situé en regard. La rampe 14 est déployée et escamotée par des moyens d'actionnement classiques, par exemple liés à des moyens de détection de quai.

La rampe 14 comporte une première partie 14A de guidage et de support, coopérant avec un rail logé dans le logement 16, si bien que cette première partie 14A est guidée en translation dans une direction horizontale X. Le dispositif comble-lacune 10 comporte en outre des moyens classiques d'entraînement de cette première partie 14A en translation le long de cette direction horizontale X.

La rampe 14 comporte également une seconde partie 14b, comprenant une surface supérieure 22 accessible en position déployée, sur laquelle des passagers peuvent circuler.

Conformément au mode de réalisation décrit, cette surface supérieure 22 est au moins en partie inclinée. Plus particulièrement, on choisira une surface supérieure 22 inclinée lorsque la rampe 14 est destinée à être déployée en regard d'un quai 20 dont la hauteur est inférieure à celle du plancher 18.

Toutefois, en variante, et notamment lorsque la rampe 14 est destinée à être déployée en regard d'un quai 20 dont la hauteur est sensiblement égale à celle du plancher 18, la surface supérieure 22 peut être choisie sensiblement parallèle à la direction horizontale X.

Le dispositif comble-lacune 10 comporte par ailleurs une trappe 24, mobile entre une position fermée d'obturation du logement 16 lorsque la rampe 14 est en position escamotée (comme cela est représenté sur la figure 2), et une position ouverte dans laquelle cette trappe 24 s'étend entre le plancher 18 et la rampe 14 (comme cela est représenté sur la figure 1).

La trappe 24 présente une extrémité supérieure 24A reliée au véhicule ferroviaire par une liaison pivot 26 d'axe perpendiculaire à la direction horizontale X, et une extrémité inférieure 24B libre.

Lorsque la trappe 24 se trouve en position ouverte, son extrémité inférieure libre 24B repose sur la surface supérieure 22 de la rampe 14. En d'autres termes, la trappe 24 en position ouverte forme un passage s'étendant entre le plancher 18 et la surface supérieure 22 de la rampe 14. En fonction de la configuration de cette trappe 24, ce passage peut former une surface inclinée entre le plancher 18 et la rampe 14, ou en variante une marche.

La trappe mobile 24 est par exemple libre en rotation autour de la liaison pivot 26. Dans ce cas, lorsque la rampe 14 se déploie depuis sa position escamotée vers sa position déployée, elle vient coopérer avec la trappe mobile 24 et la pousse depuis sa position fermée vers sa position ouverte.

Dans ce cas, lorsque la rampe 14 revient dans sa position escamotée, la trappe 24 retourne dans sa position fermée, par exemple sous l'effet d'un organe élastique, ou en variante simplement sous l'effet de la gravité.

Conformément à une autre variante, la trappe 24 est motorisée et son mouvement est commandé simultanément au mouvement de la rampe 14, ou en décalage.

Avantageusement, la trappe 24 comporte, à son extrémité inférieure 24B, des moyens de maintien en position fermée. Ces moyens de maintien sont par exemple formés par l'organe élastique évoqué ci-dessus, ou en variante par un électro-aimant.

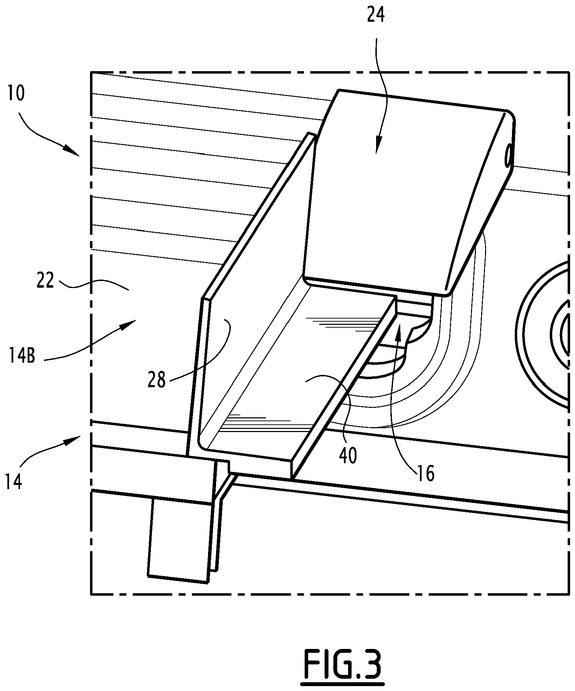

Conformément à l'invention, la rampe 14 comporte, de part et d'autre de sa seconde partie 14B, dans une direction perpendiculaire à la direction horizontale X, deux rebords latéraux 28, dont l'un est représenté sur les figures 3 à 5.

Les deux rebords latéraux 28 sont similaires, et plus particulièrement sont symétriques, si bien que seul l'un d'entre eux sera décrit ci-dessous.

Chaque rebord latéral 28 s'étend sur une partie de la longueur de la rampe 14, et plus particulièrement le long de la seconde partie 14B dans la direction horizontale X, depuis une extrémité libre de cette seconde partie 14B jusqu'à la trappe 24, comme cela est représenté sur la figure 3.

Conformément à une variante non représentée, la trappe 24 pourrait comporter également des seconds rebords latéraux, chacun prolongeant l'un respectif des rebords latéraux 28.

Dans l'exemple décrit, chaque rebord 28 présente une forme générale rectangulaire, présentant un bord supérieur 30 et un bord inférieur 32. Le rebord 28 est relié à la rampe 14 par une liaison pivot 34 définie autour d'un axe de pivotement parallèle à la direction horizontale X, cette liaison pivot 34 étant agencée à proximité du bord inférieur 32.

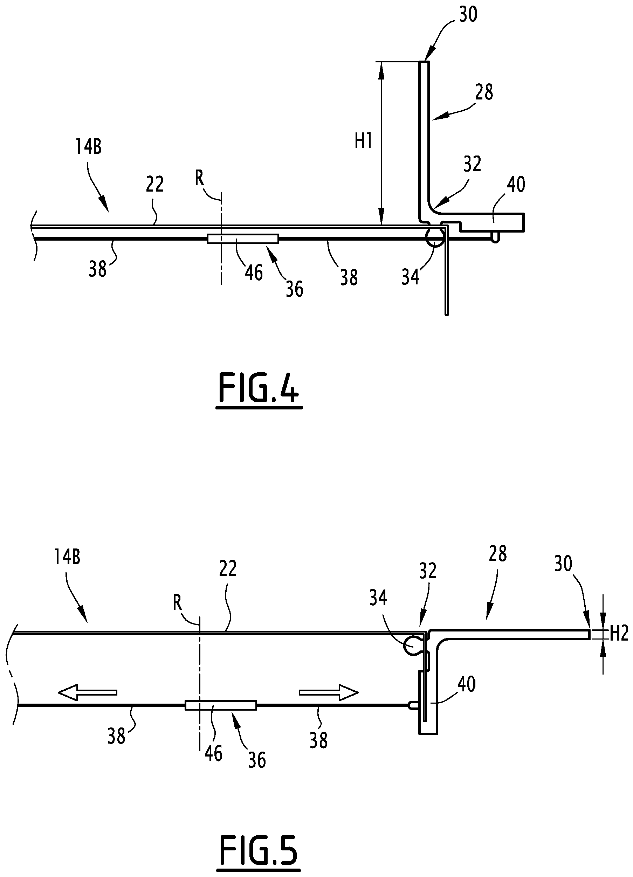

Chaque rebord latéral 28 est mobile entre une première position, représentée sur la figure 4, dans laquelle ce rebord latéral 28 s'étend verticalement en saillie par rapport à la surface supérieure 22 de la rampe 14 jusqu'à une première hauteur H1, et une seconde position, représenté sur la figure 5, dans laquelle le rebord latéral s'étend jusqu'à une seconde hauteur H2 inférieure à la première hauteur H1.

Dans la présente description, les première H1 et seconde H2 hauteurs sont considérées depuis la surface supérieure 22 jusqu'au bord supérieur 30 du rebord 28.

Conformément à l'exemple décrit, la seconde hauteur H2 est nulle, c'est-à-dire que le rebord 28 s'étend dans un même plan que la surface supérieure 22, dans le prolongement de cette surface supérieure 22.

En variante, cette seconde hauteur H2 pourrait être négative, c'est-à-dire que le bord supérieur 30 pourrait être agencé en dessous de la surface supérieure 22.

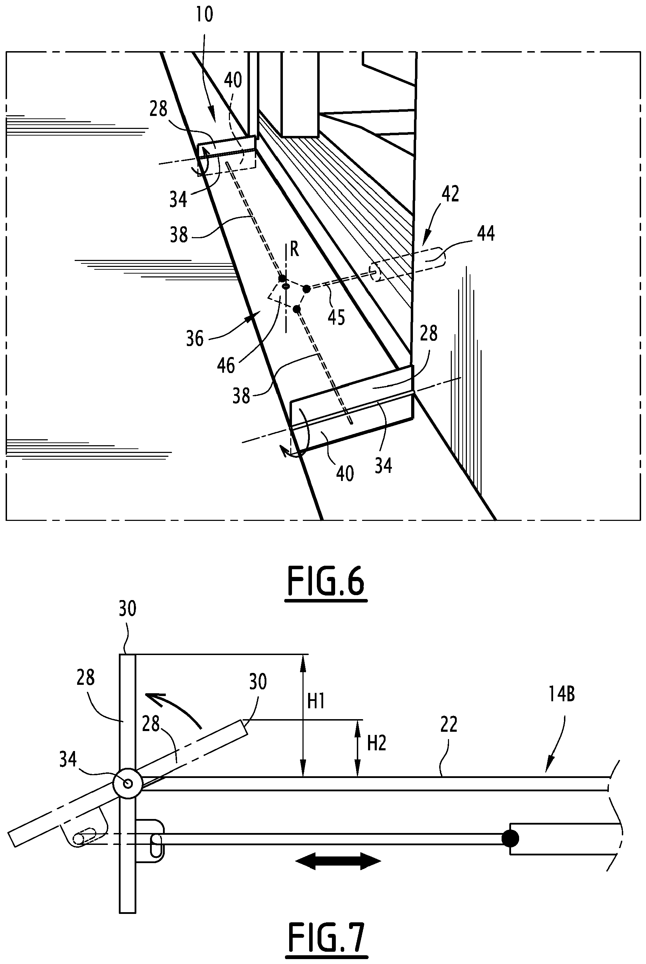

Conformément à une autre variante, la seconde hauteur H2 pourrait être positive, mais inférieur à la première hauteur H1, notamment comme cela est le cas dans la variante de réalisation de la figure 7, qui va être décrite ultérieurement.

Le dispositif comble-lacune 10 comporte en outre des moyens 36 de pivotement du rebord 28 autour de la liaison pivot 34. Ces moyens de pivotement 36 comportent une tige 38 mobile en translation dans une direction formant l'axe de pivotement, propre à entrainer le rebord 28 en rotation.

Plus particulièrement, le rebord 28 est prolongé par une partie 40 formant levier, solidaire de ce rebord 28, la liaison pivot 34 étant située entre ce rebord 28 et ce levier 40. Dans ce cas, la tige mobile 38 coopère avec le levier 40, par exemple par l'intermédiaire d'une liaison rotule.

Les moyens de pivotement 36 comportent en outre des moyens 42 de déplacement de la tige mobile 38, comprenant notamment un vérin pneumatique 44. Ce vérin 44 est visible sur la figure 6. Bien que cette figure 6 concerne une variante de réalisation, les moyens de pivotement 36 sont identiques dans le premier mode de réalisation des figures 1 à 5.

Par exemple, les moyens de déplacement 42 comportent une came excentrique 46, mobile en rotation autour d'un axe R décalé par rapport à un axe de poussée du vérin 44, et relié d'une part à un piston 45 de ce vérin 44 et d'autre part à la tige mobile 38, pour convertir un mouvement de ce piston 45 en un mouvement de la tige mobile 38.

Avantageusement, les moyens de déplacement 42 sont communs à chaque tige mobile 38, si bien que chaque tige mobile 38 est reliée à cette même came excentrique 46.

Ainsi, en activant le vérin 44, la came excentrique 46 entre en rotation autour de l'axe R, déplaçant ainsi les tiges 38 dans un sens ou dans l'autre, faisant ainsi pivoter les leviers 40, donc les rebords 28 entre leurs premières et secondes positions.

Il est à noter que les rebords 28 sont maintenus dans leurs premières ou secondes positions par les moyens de pivotement 36, et ne peuvent passer de l'une à l'autre de ces positions que lorsque les moyens de pivotement 36 sont activés.

Dans l'exemple décrit sur les figures 3 à 5, chaque rebord 28 est relié au levier 40 correspondant en formant un angle. Ainsi, le rebord 28 lié au levier 40 présentent ensemble une section transversale en forme de L, la liaison pivot 34 étant ménagée à proximité de l'intersection entre le rebord 28 et le levier 40.

On a représenté sur les figures 6 et 7, un dispositif comble-lacune 10 selon une variante de réalisation. Sur ces figures, les éléments analogues à ceux des figures précédentes sont désignés par des références identiques.

Conformément à cette variante, chaque rebord 28 et le levier 40 correspondante sont sensiblement coplanaires, l'un dans le prolongement de l'autre. La liaison pivot 34 est alors ménagée entre ce rebord 28 et ce levier 40.

Dans ce cas, comme cela est représenté sur la figure 7, il n'est pas possible de faire pivoter le rebord 28 jusqu'à qu'il se trouve dans le prolongement de la surface supérieure 22. Il est toutefois possible de rabattre ce rebord 28 sur la surface supérieure 22, auquel cas il subsiste une seconde hauteur H2 positive entre cette surface supérieure 22 et le bord supérieur 30 du rebord 28. Toutefois, cette seconde hauteur H2 reste inférieure à la première hauteur H1, si bien que l'encombrement de la rampe 14 est réduit lorsque les rebords 28 sont dans leurs secondes positions.

Il est à noter que la hauteur du rebord 28, c'est-à-dire la hauteur H1 dans la première position, est généralement comprise entre 0 et 60 mm.

La présente invention n'est pas limitée au mode de réalisation précédemment décrit, mais pourrait présenter diverses variantes.

Par exemple, il est possible de prévoir d'autres formes de rebord 28 et de levier 40.

Par ailleurs, conformément à une autre variante, on peut prévoir des moyens de pivotement différents. Par exemple, on peut prévoir un système de cames faisant passer les rebords 28 depuis leurs premières positions jusqu'à leurs secondes positions lorsque la rampe 14 se déplace depuis sa position escamotée jusqu'à sa position déployée. Ainsi, de tels moyens de pivotement ne comporterait pas d'actionneur 44 supplémentaire autre que le système d'actionnement de la rampe 14.

## Revendications

1. Dispositif comble-lacune (10), destiné à équiper un véhicule ferroviaire (12), comportant une rampe (14) mobile dans une direction horizontale (X) entre une position escamotée dans un logement (16) ménagé sous un plancher (18) du véhicule ferroviaire (12), et une position déployée hors dudit logement (16), ladite rampe (14) comportant une surface supérieure (22) accessible en position déployée, la rampe (14) comportant des rebords latéraux (28), s'étendant sur au moins une partie de la longueur de la rampe (14), chacun mobile entre une première position, dans laquelle ce rebord latéral (28) s'étend verticalement en saillie par rapport à la surface supérieure (22) de la rampe (14) jusqu'à une première hauteur (H1), et une seconde position, dans laquelle le rebord latéral (28) s'étend jusqu'à une seconde hauteur (H2) inférieure à la première hauteur (H1),
**caractérisé en ce que** chaque rebord (28) est relié à la rampe (14) par une liaison pivot (34) définie autour d'un axe de pivotement sensiblement parallèle à la direction horizontale (X).

2. Dispositif comble-lacune (10) selon la revendication 1, dans lequel chaque rebord latéral (28) est prolongé par une partie formant levier (40), solidaire du rebord (28), le dispositif comble-lacune (10) comportant des moyens (36) de pivotement du rebord (28) autour de la liaison pivot (34).

3. Dispositif comble-lacune (10) selon la revendication 2, dans lequel les moyens de pivotement (36) comportent :
- une tige (38) mobile en translation dans une direction formant un angle non nul avec l'axe de pivotement, coopérant avec la partie formant levier (40),
- des moyens (42) de déplacement de la tige mobile (38), comprenant un vérin (44).

4. Dispositif comble-lacune (10) selon la revendication 3, dans lequel les moyens de déplacement (42) sont communs à chaque tige mobile (38), et comportent une came excentrique (46), reliée d'une part à un piston (45) du vérin (44) et d'autre part à chaque tige mobile (38), pour convertir un mouvement du piston (45) en un mouvement de chaque tige mobile (38).

5. Dispositif comble-lacune (10) selon l'une quelconque des revendications 2 à 4, dans lequel chaque rebord (28) est relié à la partie formant levier (40) respective en formant un angle, de sorte que le rebord (28) lié à la partie formant levier (40) présentent ensemble une section transversale en forme de L, la liaison pivot (34) étant ménagée à proximité de l'intersection entre le rebord (28) et la partie formant levier (40).

6. Dispositif comble-lacune (10) selon l'une quelconque des revendications 2 à 4, dans lequel chaque rebord (28) et la partie formant levier (40) correspondante sont sensiblement coplanaires, l'un dans le prolongement de l'autre, la liaison pivot (34) étant ménagée entre ce rebord (28) et cette partie formant levier (40).

7. Dispositif comble-lacune (10) selon l'une quelconque des revendications précédentes, comportant une trappe (24) mobile entre une position fermée d'obturation du logement (16) lorsque la rampe (14) est en position escamotée, et une position ouverte dans laquelle la trappe (24) s'étend entre le plancher (18) et la rampe (14) en position déployée.

8. Dispositif comble-lacune (10) selon la revendication 7, dans lequel la trappe (24) en position ouverte repose sur la surface supérieure (22) de la rampe (14), chaque rebord (28) s'étendant, dans la direction horizontale, depuis la trappe (24) jusqu'à une extrémité libre de la rampe (14).

9. Dispositif comble-lacune (10) selon l'une quelconque des revendications précédentes, dans lequel la hauteur d'un rebord (28) est comprise entre 0 et 6 cm.

10. Dispositif comble-lacune selon l'une quelconque des revendications précédentes, dans lequel la surface supérieure (22) de la rampe (14) est au moins en partie inclinée.

## Patentansprüche

1. Lückenüberbrückungs-Vorrichtung (10), mit welcher ein Schienenfahrzeug (12) ausrüstbar ist, aufweisend eine Rampe (14), die in einer horizontalen Richtung (X) bewegbar ist zwischen einer Eingefahren-Position in einer Unterbringung (16), die unter einem Fußboden (18) des Schienenfahrzeugs (12) vorliegt, und einer Ausgefahren-Position außerhalb der Unterbringung (16), wobei die Rampe (14) eine obere Fläche (22) aufweist, die in der Ausgefahren-Position zugänglich ist, wobei die Rampe (14) seitliche Simse (28) aufweist, die sich über wenigstens einen Teil der Länge der Rampe (14) erstrecken und von denen jeder bewegbar ist zwischen einer ersten Position, in welcher dieser seitliche Sims (28) sich vertikal vorspringend erstreckt bezüglich der oberen Fläche (22) der Rampe (14) bis zu einer ersten Höhe (H1), und einer zweiten Position, in welcher der seitliche Sims (28) sich bis zu einer zweiten Höhe (H2) erstreckt, die kleiner als die erste Höhe (H1) ist,
**dadurch gekennzeichnet, dass** jeder Sims (28) mit der Rampe (14) verbunden ist über eine Schwenkverbindung (34), die um eine Schwenkachse definiert ist, die im Wesentlichen parallel zu der horizontalen Richtung (X) ist.

2. Lückenüberbrückungs-Vorrichtung (10) gemäß Anspruch 1, wobei jeder seitliche Sims (28) verlängert ist durch einen Hebel-bildenden-Abschnitt (40), der fest mit dem Sims (28) verbunden ist, wobei die Lückenüberbrückungs-Vorrichtung (10) aufweist Mittel (36) zum Schwenken des Simses (28) um die Schwenkverbindung (34).

3. Lückenüberbrückungs-Vorrichtung (10) gemäß Anspruch 2, wobei die Mittel zum Schwenken (36) aufweisen:
- eine Stange (38), die translationsbewegbar ist in eine Richtung, die einen Winkel ungleich Null mit der Schwenkachse bildet, und die mit dem Hebel-bildenden-Abschnitt (40) zusammenwirkt,
- Mittel (42) zum Verlagern der bewegbaren Stange (38), die einen Zylinder (44) aufweisen.

4. Lückenüberbrückungs-Vorrichtung (10) gemäß Anspruch 3, wobei die Mittel zum Verlagern (42) an jeder bewegbaren Stange (38) gemeinsam sind und einen exzentrischen Mitnehmer (46) aufweisen, der einerseits mit einem Kolben (45) des Zylinders (44) und andererseits mit jeder bewegbaren Stange (38) verbunden ist, zum Konvertieren einer Bewegung des Kolbens (45) in eine Bewegung jeder bewegbaren Stange (38).

5. Lückenüberbrückungs-Vorrichtung (10) gemäß irgendeinem der Ansprüche 2 bis 4, wobei jeder Sims (28) mit dem zugeordneten Hebel-bildenden-Abschnitt (40) verbunden ist unter Bilden eines Winkels derart, dass der Sims (28) verbunden mit dem Hebel-bildenden-Abschnitt (40) gemeinsam einen Querschnitt in Form eines L haben, wobei die Schwenkverbindung (34) in der Nähe der Schnittstelle zwischen dem Sims (28) und dem Hebel-bildenden-Abschnitt (40) vorliegt.

6. Lückenüberbrückungs-Vorrichtung (10) gemäß irgendeinem der Ansprüche 2 bis 4, wobei jeder Sims (28) und der korrespondierende Hebel-bildende-Abschnitt (40) im Wesentlichen komplanar sind, einer in Verlängerung des anderen, wobei die Schwenkverbindung (34) zwischen diesem Sims (28) und diesem Hebel-bildenden-Abschnitt (40) vorliegt.

7. Lückenüberbrückungs-Vorrichtung (10) gemäß irgendeinem der vorhergehenden Ansprüche, aufweisend eine Klappe (24), die bewegbar ist zwischen einer Geschlossen-Position zum Verschließen der Unterbringung (16), wenn die Rampe (14) in Eingefahren-Position ist, und einer Geöffnet-Position, in welcher die Klappe (24) sich zwischen dem Fußboden (18) und der Rampe (14) erstreckt in Ausgefahren-Position.

8. Lückenüberbrückungs-Vorrichtung (10) gemäß Anspruch 7, wobei die Klappe (24) in Geöffnet-Position sich auf der oberen Fläche (22) der Rampe (14) abstützt, wobei jeder Sims (28) sich in der horizontalen Richtung von der Klappe (24) aus bis zu einem freien Ende der Rampe (14) erstreckt.

9. Lückenüberbrückungs-Vorrichtung (10) gemäß irgendeinem der vorhergehenden Ansprüche, wobei die Höhe eines Simses (28) zwischen 0 und 6 cm beträgt.

10. Lückenüberbrückungs-Vorrichtung (10) gemäß irgendeinem der vorhergehenden Ansprüche, wobei die obere Fläche (22) der Rampe (14) zumindest teilweise geneigt ist.

## Claims

1. A gap filling device (10), designed to be fitted on to a rail vehicle (12), that includes a movable ramp (14) that is movable in a horizontal direction (X) between a retracted position within a housing (16) arranged under a floor (18) of the rail vehicle (12), and a deployed position extending out of the said housing (16), the said ramp (14) comprising an upper surface (22) that is accessible in the deployed position, the ramp (14) including lateral flanged edges (28) extending over at least a portion of the length of the ramp (14), with each being movable between a first position, in which this lateral flanged edge (28) extends vertically projecting outwards in relation to the upper surface (22) of the ramp (14) up to a first height (H1), and a second position, in which the lateral flanged edge (28) extends up to a second height (H2) that is lower than the first height (H1),
**characterized in that** each flanged edge (28) is connected to the ramp (14) by a pivot link (34) defined about a pivot axis that is substantially parallel to the horizontal direction (X).

2. A gap filling device (10) according to claim 1, in which each lateral flanged edge (28) is extended by a lever-forming portion (40) which is integrally attached to the flanged edge (28), the gap filling device (10) comprising the pivoting (36) for pivoting the flanged edge (28) about the pivot link (34).

3. A gap filling device (10) according to claim 2, in which the pivoting means (36) comprise:
- a movable rod (38) that is movable in translational motion in a direction forming a non-zero angle with the pivot axis, which cooperates with the lever-forming portion (40),
- the rod moving means (42) for moving the movable rod (38), which comprises a cylinder (44).

4. A gap filling device (10) according to claim 3, in which the rod moving means (42) are common to all the movable rods (38), and comprise an eccentric cam (46), connected on the one hand to a piston (45) of the cylinder (44) and on the other hand to each movable rod (38), in order to convert a movement of the piston (45) into a movement of each movable rod (38).

5. A gap filling device (10) according to any one of claims 2 to 4, in which each flanged edge (28) is connected to the respective lever-forming portion (40) by forming an angle, in such a manner that the flanged edge (28) linked to the lever-forming portion (40 together present a transverse cross section of L-shaped form, with the pivot link (34) being arranged in the proximity of the intersection between the flanged edge (28) and the lever-forming portion (40).

6. A gap filling device (10) according to any one of claims 2 to 4, in which each flanged edge (28) and the corresponding lever-forming portion (40) are substantially coplanar, such that they serve as the extensions to one another: with the pivot link (34) being arranged between the said flanged edge (28) and the said lever-forming portion (40).

7. A gap filling device (10) according to any one of the preceding claims, comprising a movable hatch (24) that is movable between a closed position for closing off the housing (16) when the ramp (14) is in retracted position, and an open position in which the hatch (24) extends between the floor (18) and the ramp (14) in the deployed position.

8. A gap filling device (10) according to claim 7, in which the hatch (24) in the open position rests on the upper surface (22) of the ramp (14), with each flanged edge (28) extending, in the horizontal direction, from the hatch (24) to a free end of the ramp (14).

9. A gap filling device (10) according to any one of the preceding claims, in which the height of a flanged edge (28) is comprised between 0 cm and 6 cm.

10. A gap filling device (10) according to any one of the preceding claims, in which the upper surface (22) of the ramp (14) is inclined at least in part.
